Europäisches Patentamt

European Patent Office

Office européen des brevets

(11) Publication number: **0 314 644**
**A2**

# EUROPEAN PATENT APPLICATION

(21) Application number: **88830445.8**

(22) Date of filing: **25.10.88**

(51) Int. Cl.⁴: **F 16 H 57/02**

(30) Priority: **26.10.87 IT 5375687**

(43) Date of publication of application:
**03.05.89 Bulletin 89/18**

(84) Designated Contracting States:
**AT CH DE ES FR GB LI**

(71) Applicant: **SAME S.p.A.**
**Viale F. Cassani, 14**
**I-24047 Treviglio Bergamo (IT)**

(72) Inventor: **Massaccesi, Gianni**
**c/o Same S.p.A. Viale F. Cassani, 14**
**I-24047 Treviglio (Bergamo) (IT)**

(74) Representative: **Buzzi, Franco et al**
**c/o Jacobacci-Casetta & Perani S.p.A. Via Alfieri, 17**
**I-10121 Torino (IT)**

(54) A gearbox casing for tractors.

(57) A gearbox casing for tractors is constituted by a generally cylindrical body (1) including a first, enlarged initial section (2) followed by second and third coaxial sections (3, 4). The three sections are adapted to receive selectively and equally well various units to allow the production of three different combinations corresponding respectively to a mechanical version, a partial power-shift version and a full power-shift version of the tractor gearbox.

FIG. 1

EP 0 314 644 A2

## Description

## A gearbox casing for tractors

The present invention relates in general to tractor gearboxes.

It is well known that such gearboxes are made by the manufacturers in various more or less complex and sophisticated configurations with fewer or more ratios and speed ranges, and with mechanically-operated and/or hydraulically-operated power-shift systems for varying the speed ratios.

Each of these gearbox versions conventionally has a corresponding casing which is built and shaped so as to be specifically adapted to that specific version. This obviously burdens the production since it is necessary to provide a plurality of different casings usable as occasion demands with the chosen gearbox configuration.

The object of the present invention is to avoid this disadvantage and to provide a gearbox casing for tractors with a standardised conformation adapted for use with the various versions of gearbox which it is foreseen may be installed in tractors.

In order to achieve this object, the present invention provides a casing for a tractor gearbox, characterised in that is constituted by a generally-cylindrical body including an enlarged first section for the inlet of the driving shaft of the tractor followed by second and third coaxial sections, the three sections being adapted selectively and equally well to receive the first a dry friction clutch or an epicyclic power-shift unit with three ratios, followed by a central hydraulic friction clutch, and the second and the third a mechanical unit with three forward ratios and three reverse ratios and a mechanical gearbox with three ratios, or a synchronised reverser and a mechanical gearbox with three ratios, or even a power-shift gearbox with three ratios and a synchronised reverser, so as to allow the formation of three different combinations corresponding respectively to a mechanical version, a partial power-shift version and a full power-shift version of the tractor gearbox.

The invention will now be described in detail with reference to the appended drawings, provided purely by way of non-limiting example, in which:

Figure 1 is a schematic longitudinally-sectioned view of a tractor gearbox casing according to the invention, shown in use for a mechanical version of a gearbox,

Figure 2 is a view similar to Figure 1, showing the casing in use with a partial power-shift gearbox, and

Figure 3 is a view similar to Figures 1 and 2, showing the application of the casing to a full power-shift type gearbox.

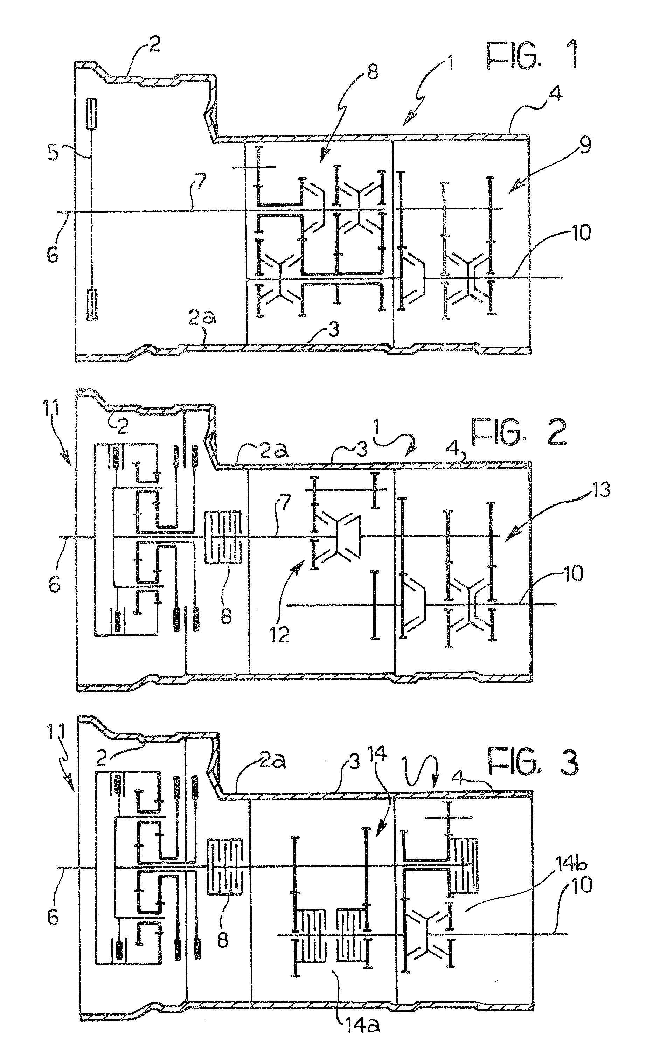

With reference to Figure 1, a tractor gearbox casing is generally indicated 1 and is constituted by a generally cylindrical housing including a first, enlarged initial section 2, a second section 3 and a third section 4.

The section 3 is joined to the initial section 2 by a connecting portion 2a forming part of the initial section 2 and having dimensions corresponding to those of the section 3.

With the configuration described above, the casing 1 is adapted to receive selectively and equally well various gearbox units which combine together to form three different configurations corresponding respectively to a mechanical version (Figure 1), a partial power-shift version (Figure 2) and a full power-shift version (Figure 3) of the tractor gearbox.

In the case of the mechanical version of Figure 1, the casing 1 houses a dry friction clutch, schematically indicated 5, in the initial section 2 for coupling the driving shaft 6 of the tractor to the input shaft 7 of the gearbox. In this version, the section 3 of the casing 1 contains a mechanical unit with three forward ratios and three reverse ratios, generally indicated 8, and the final section 4 houses a mechanical gearbox generally indicated 9, with three speeds. In known manner, the output shaft 10 of the mechanical gearbox 9 controls a reduction unit with three ranges in cascade, not illustrated, contained in a housing also not shown and connected to the section 4 of the casing 1.

This mechanical gearbox arrangement allows nine forward speed ratios and as many reverse speed ratios to be provided which, through the ranges of the reduction unit, brings the total number of forward gears to 27 and the total number of reverse ratios to 27.

In the embodiment of Figure 2, in which parts similar or identical to those described with reference to Figure 1 are indicated by the same reference numerals, the same casing 1 houses a partial power-shift version of a gearbox with the same number of ratios available as that of the wholly mechanical version of Figure 1. In this case, the initial section 2 of the casing 1 houses an epicyclic unit with three power-shift speed ratios, generally indicated 11, from which drive is transmitted to the shaft 7 through a central hydraulic friction clutch 8 housed in the connecting portion 2a of the casing. The section 3 contains a synchronised reverser 12 which transmits drive to a three-ratio mechanical gearbox 13 housed in the section 4.

The gearbox according to this configuration thus provides three power-shift speed ratios and three mechanically-operated ratios for both forward movement and reverse, giving a total of nine ratios which, through the ranges of the reduction unit applied downstream of the gearbox, become twenty-seven.

In the case of Figure 3, in which parts identical or similar to those already described are also indicated by the same reference numerals, the casing 1 houses a full power-shift reversing gearbox which also provides, through the final reduction unit, twenty-seven forward gear ratios and twenty-seven reverse ratios. In this case, the section 2 of the casing 1 houses an epicyclic unit with three power-shift ratios 11 identical to that of Figure 1 and transmits drive through the central hydraulic friction clutch 8 housed in the connecting portion 2a to a power-shift gearbox with a synchronised reverser, generally indicated 14.

The portion of this gearbox 14 corresponding to the first and third speed ratios, indicated 14a, is housed in the section 3 of the casing 1, while the portion corresponding to the second speed ratio and the synchronised reverser, generally indicated 14b, is inserted in the section 4 of the casing.

It will be clear from the above that the casing 1 is suitable, without modification, for selective use with any one of the gearboxes described above and possibly also with other gearboxes which use different combinations of the components described above.

### Claims

1. A casing for a tractor gearbox, characterised in that it is constituted by a generally-cylindrical body (1) including an enlarged section (2) for the inlet of the driving shaft (6) of the tractor followed by second (3) and third (4) coaxial sections, the three sections (2,3,4) being adapted selectively and equally well to receive the first (2) a dry friction clutch (5) or an epicyclic power-shift unit (11) with three ratios, followed by a central hydraulic friction clutch (8), and the second and the third (3, 4) a mechanical unit (8) with three forward ratios and three reverse ratios and a mechanical gearbox (9) with three ratios, or a synchronised reverser (12) and a mechanical gearbox (13) with three ratios, or even a power-shift gearbox (14) with three ratios and a synchronised reverser, so as to allow the formation of different combinations corresponding respectively to a mechanical version, a partial power-shift version and a full power-shift version of the tractor gearbox.

FIG. 1

FIG. 2

FIG. 3